# EUROPÄISCHE PATENTSCHRIFT

(11) **EP 2 384 620 B1**
(45) Veröffentlichungstag und Bekanntmachung des Hinweises auf die Patenterteilung: **15.04.2015**
(21) Anmeldenummer: 11001362.0
(22) Anmeldetag: 18.02.2011
(51) Int. Cl.: A01K 63/04

(54) **Vorrichtung zum Bestrahlen von Medien mittels UV-Licht**
Device for irradiating media with UV light
Dispositif de rayonnement de fluides à l'aide d'une lumière UV

(30) Priorität: 05.05.2010 DE 102010019335
(43) Veröffentlichungstag der Anmeldung: 09.11.2011
(73) Patentinhaber: Eheim GmbH & Co. KG, 73779 Deizisau (DE)
(72) Erfinder: Wißkirchen, Michael, 73095 Albershausen (DE); Voß, Peter, 73728 Esslingen (DE); Mayer, Ferdinand, 72644 Oberboihingen (DE); Blossey, Björn, 73066 Uhingen (DE); Valder, Werner, 52385 Nideggen/Abenden (DE)
(74) Vertreter: Witte, Weller & Partner Patentanwälte mbB

(56) Entgegenhaltungen:
- US-A- 5 247 178
- US-A1- 2005 167 611
- US-B1- 6 451 202
- US-B1- 6 614 028

## Beschreibung

Die Erfindung bezieht sich auf eine Vorrichtung zum Bestrahlen von Medien mittels UV-Licht, mit einem Gehäuse, das mindestens einen vom Medium durchströmten Rohrkörper aus UV-durchlässigem Werkstoff und mindestens eine in Abstand vom Rohrkörper etwa parallel dazu angeordnete UV-Lichtquelle enthält, der ein erster Reflektor zugeordnet ist, wobei dem mindestens einen Rohrkörper ein zweiter Reflektor zugeordnet ist, der dem ersten Reflektor der UV-Lichtquelle gegenüberliegt und zu diesem hin offen ist, und wobei die UV-Lichtquelle zwei zueinander etwa parallele, nebeneinander verlaufende Stäbe mit einem gemeinsamen Sockel aufweist, mit dem diese an einem Deckelteil des Gehäuses derart gehalten sind, dass der Deckelteil mitsamt der UV-Lichtquelle als Einheit demontierbar ist.

Vorrichtungen dieser Art dienen insbesondere der Entkeimung von Flüssigkeiten und finden z. B. mit besonderem Vorteil in der Aquaristik Anwendung zur Entkeimung von Aquarienwässern.

Bei einer bekannten Vorrichtung der eingangs genannten Art ist ein zentral angeordneter Rohrkörper für den Mediumdurchfluss vorgesehen, an den außen mindestens zwei achsparallel angeordnete UV-Lichtquellen mit jeweiligen Reflektoren angesetzt sind. Die Lichtquellen sind durch UV-Flachstrahler gebildet, die einen länglich flachovalen Querschnitt mit Breit- und Schmalseiten aufweisen. Die Schmalseiten der UV-Lichtquellen sind jeweils mit ihrer Mittelachse auf den Mittelpunkt des Rohrkörperquerschnittes gerichtet, wobei die von den Breitseiten emittierte Strahlung der UV-Flachstrahler mittels der Reflektoren, die den UV-Lichtquellen zugeordnet sind, auf den zentral angeordneten Rohrkörper gelenkt wird. Es hat sich gezeigt, dass bei einer derartigen Vorrichtung die erzielbare Entkeimungswirkung beim hindurchgeführten, zu entkeimenden Medium, insbesondere z. B. Aquariumwasser, zu wünschen übrig lässt. Dies liegt an der Art der UV-Lichtquelle und den zugeordneten, auf den zentralen Rohrkörper aufgesetzten Reflektoren. Die Vorrichtung ist außerdem voluminös und hat einen relativ großen Platzbedarf. Sie ist einer kompakten und gefälligen Formgebung kaum zugänglich.

Aus der US 6,451,202 B1 ist eine Wasser-Entnahmestelle bekannt, welche eine Vorrichtung zum Bestrahlen von Medien mittels UV-Licht gemäß dem Oberbegriff des Anspruchs 1 aufweist. Weitere Vorrichtungen zur Entkeimung von Flüssigkeiten mittels UV-Licht sind aus der US 2005/0167611 A1, der US 6,614,028 B1 sowie aus der US 5,247,178 A bekannt.

Der Erfindung liegt die Aufgabe zugrunde, eine Vorrichtung der eingangs genannten Art zu schaffen, die eine kompakte, platzsparende und einfache Bauweise bei verbesserter Entkeimungsleistung ermöglicht.

Die Aufgabe ist bei einer Vorrichtung der eingangs genannten Art gemäß Anspruch 1 dadurch gelöst, dass der erste Reflektor und der zweite Reflektor auf einem gemeinsamen Kreis verlaufen und jeweils etwa halbkreisförmig ausgestaltet sind, wobei der Rohrkörper mit seiner Längsmittelachse auf einer zur Längsmittelachse etwa parallelen Brennpunktachse des zweiten Reflektors angeordnet ist, wobei die Brennpunktachse des zweiten Reflektors innerhalb einer Diametralebene liegt und mit einem Abstand von etwa dem halben Radius von der Mitte des gemeinsamen Kreises verläuft, wobei die Stäbe derart im Gehäuse angeordnet sind, dass die beiden Stäbe mit ihren Längsmittelachsen innerhalb einer beiden gemeinsamen Stablängsebene verlaufen, wobei die Stablängsebene radial und dem Rohrkörper diametral gegenüberliegend verläuft und auf einer zu der Diametralebene rechtwinklig verlaufenden Kreissekante liegt, die einen Abstand von etwa dem halben Radius von der Mitte des gemeinsamen Kreises hat und dem Rohrkörper diametral gegenüberliegt, und wobei eine Brennpunktachse des ersten Reflektors mit einem Abstand von etwa dem halben Radius von der Mitte des gemeinsamen Kreises innerhalb der Diametralebene verläuft und innerhalb der Stablängsebene liegt.

Die erfindungsgemäße Vorrichtung sieht somit sowohl für die UV-Lichtquelle als auch für den mindestens einen Rohrkörper einen jeweils zugeordneten Reflektor vor. Es hat sich gezeigt, dass hierdurch ein solcher Strahlengang im System erreichbar ist, der zu einer erheblichen Verbesserung der Entkeimungsleistung beim hindurchgeführten Medium führt. Dabei ist die Vorrichtung betriebssicher, kompakt und kostengünstig. Sie hat einen reduzierten geringen Platzbedarf.

Erfindungsgemäß ist vorgesehen, dass der Reflektor der mindestens einen UV-Lichtquelle (erster Reflektor) etwa halbkreisförmig ist. In gleicher Weise ist auch der Reflektor des Rohrkörpers (zweiter Reflektor) etwa halbkreisförmig. Beide Reflektoren verlaufen auf einem gemeinsamen Kreisbogen, insbesondere Kreis, wobei sich beide Reflektoren zu einem Reflektorkreis ergänzen. Jeder Reflektor kann an der Innenseite des Gehäuses angeordnet oder dort z. B. als Spiegelschicht ausgebildet sein. Von Vorteil kann es sein, wenn der Reflektorkreis aus einem etwa zylindrischen Rohr mit innenseitiger Reflektionsfläche gebildet ist und dieses Rohr im Inneren des Gehäuses zwischen beidseitigen Gehäusedeckeln angeordnet ist.

Die Erfindung sieht vor, dass der Rohrkörper mit seiner Längsmittelachse auf der zur Längsmittelachse etwa parallelen Brennpunktachse, seines zugeordneten Reflektors angeordnet ist. Die Brennpunktachse des Reflektors des Rohrkörpers und/oder des Reflektors der UV-Lichtquelle liegen innerhalb einer Diametralebene und etwa bei dem halben Radius des Kreises. Es hat sich gezeigt, dass hierbei eine außerordentlich gute direkte Bestrahlung des im Rohrkörper geführten Mediums und damit Entkeimung dieses erreicht werden kann.

Die UV-Lichtquelle weist zwei zueinander etwa parallele, nebeneinander verlaufende Stäbe mit einem gemeinsamen Sockel auf, mit dem diese an einem Deckelteil des Gehäuses derart gehalten sind, dass der Deckelteil mitsamt der UV-Lichtquelle als Einheit demontierbar ist. Dadurch ist ein Zugang zur UV-Lichtquelle, z. B. zum Austausch dieser, vereinfacht bei kompakter Bauweise.

Die beiden Stäbe der UV-Lichtquelle verlaufen mit ihren Längsmittelachsen innerhalb einer beiden gemeinsamen Stablängsebene und die Brennpunktachse des zugeordneten Reflektors liegt innerhalb der Stablängsebene.

Die Anordnung der beiden Stäbe ist erfindungsgemäß so gewählt, dass die Stäbe derart im Gehäuse angeordnet sind, dass die beiden gemeinsame Stablängsebene radial und dem Rohrkörper diametral gegenüberliegend verläuft. Die Brennpunktachse des Reflektors des Rohrkörpers verläuft innerhalb derjenigen Diametralebene, innerhalb der die Stablängsebene verläuft. Die zur Stablängsebene etwa parallele Brennpunktachse des zugeordneten Reflektors hat einen Abstand von der Größe etwa des halben Radius von der Kreismitte.

Die UV-Lichtquelle ist derart angeordnet, dass die den Stäben gemeinsame Stablängsebene auf einer solchen Kreissekante liegt, die zu der Diametralebene rechtwinklig verläuft. Diese Kreissekante hat einen Abstand von der Größe etwa des halben Radius von der Kreismitte und liegt dem Rohrkörper diametral gegenüber. Die Brennpunktachse des Reflektors der UV-Lichtquelle verläuft dabei mit einem Abstand von etwa dem halben Radius von der Kreismitte innerhalb der Diametralebene, die zur Kreissekante etwa rechtwinklig gerichtet ist. Die Brennpunktachse des Reflektors des Rohrkörpers liegt auch innerhalb der Diametralebene und etwa auf dem halben Radius von der Kreismitte.

Bei einer vorteilhaften Ausführungsform sind die beiden Stäbe der UV-Lichtquelle und der Rohrkörper im Dreieck zueinander angeordnet. Der Rohrkörper kann derart im Gehäuse angeordnet sein, dass dessen Längsmittelachse zum Längsverlauf der UV-Lichtquelle und zur Längsmittelachse des Gehäuses etwa parallel verläuft. Der Rohrkörper kann an einem Ende mit einem Anschluss für den Zufluss und am gegenüberliegenden Ende mit einem Anschluss für den Abfluss des zu entkeimenden Mediums dicht verbunden sein, wobei die Anschlüsse mit der Längsmittelachse des Rohrkörpers fluchten. Aufgrund dieser koaxialen Anordnung der Anschlüsse und des Rohrkörpers wird eine längsgerichtete horizontale Strömung des zu entkeimenden Mediums erreicht. Ein etwaiger Druckverlust bei der Hindurchleitung des Mediums ist aufgrund dessen sehr gering und damit ein etwaiger Verlust an Volumenstrom.

Vorteilhaft kann es sein, wenn jeder Anschluss etwa rohrförmig ist und unter Abdichtung in die zugeordneten Rohrenden des Rohrkörpers eingebracht ist, insbesondere eingesteckt ist. Dies führt zu einer besonders einfachen und kompakten Bauweise.

Jeder Anschluss kann durch eine Öffnung in einem jeweiligen stirnseitigen Gehäusedeckel, unter Abdichtung diesem gegenüber, hindurch nach außen geführt sein. Einer der Gehäusedeckel kann einen Durchlass für die UV-Lichtquelle mit Sockel und eine äußere Dichtfläche aufweisen, an der der Deckelteil, der den Sockel mit UV-Lichtquelle trägt, mit einer Dichtung anliegt. Dieser Deckelteil kann z. B. durch Federklipse leicht lösbar am Gehäusedeckel gehalten sein. Unter Umständen reicht auch eine bloße Anlage daran.

Eine weitere vorteilhafte Ausführungsform sieht vor, dass der Deckelteil, der den Sockel mit der UV-Lichtquelle trägt, und der Gehäuseteil mittels einer lösbaren Abschlußkappe abgedeckt sind, durch die einer der Anschlüsse für den Zufluss und den Abfluss und ferner die elektrische Stromversorgung der UV-Lichtquelle hindurchgeführt sind. Aufgrund dessen ergibt sich eine kostengünstige Gestaltung und kompakte, gefällige Bauform. Es sind die Voraussetzungen dafür geschaffen, den Deckelteil, der den Sockel mit der UV-Lichtquelle trägt, in einfacher Weise demontieren zu können, ohne die Dichtheit des Systems nachteilig zu beeinflussen.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische perspektivische Ansicht einer Vorrichtung zum Bestrahlen von Medien mittels UV-Licht,
- Fig. 2: einen schematischen axialen Längsschnitt der Vorrichtung in Fig. 1,
- Fig. 3: eine perspektivische Explosionsdarstellung der Vorrichtung in Fig. 1,
- Fig. 4: einen schematischen senkrechten Schnitt der Vorrichtung in Fig. 1 in größerem Maßstab.

In den Zeichnungen ist schematisch eine Vorrichtung 10 gezeigt, die zum Bestrahlen von Medien mittels ultraviolettem Licht, nachfolgend mit UV-Licht bezeichnet, insbesondere für die Entkeimung von Flüssigkeiten, ausgebildet ist. Vorrichtungen 10 dieser Art eignen sich mit besonderem Vorteil z. B. für die Anwendung in der Aquaristik.

Die Vorrichtung 10 weist ein etwa zylindrisches Gehäuse 11 auf, das an beiden Enden mittels jeweiliger Gehäusedeckel 12 und 13 verschlossen ist. Die Gehäusedeckel 12, 13 sind etwa kreisförmig mit über das Gehäuse 11 überstehenden, etwa geradlinigen Fußteilen 14 bzw. 15 zum Aufstellen oder Anlegen an geeigneten Flächen. Vom einen Gehäusedeckel 13 strebt eine streifenförmige Lasche 16 mit endseitigen Haken 17 ab, die der Handhabung und z. B. zum Anhängen an einer Aquariumwand dient. Im Gehäuse 11 ist mindestens ein vom Medium durchströmter Rohrkörper 18 enthalten, der aus UV-durchlässigem Werkstoff, z. B. Kunststoff, besteht. Ferner ist im Gehäuse 11 mindestens eine UV-Lichtquelle 28 enthalten, die in Abstand vom Rohrkörper 18 und etwa parallel zu diesem angeordnet ist. Der Rohrkörper 18 ist im Gehäuse 11 derart angeordnet, dass die Längsmittelachse 19 des Rohrkörpers 18 zum Längsverlauf der UV-Lichtquelle 28 und zur Längsmittelachse 20 des Gehäuses 11 etwa parallel verläuft. Der Rohrkörper 18 ist jedem Ende mit einem Anschluss 21 und 22 dicht verbunden, von denen einer dem Zufluss des Mediums zum Rohrkörper 18 und der andere dem Abfluss des Mediums vom Rohrkörper 18 dient. Die Anschlüsse 21, 22 fluchten mit der Längsmittelachse 19. Jeder Anschluss 21, 22 ist etwa rohrförmig und in das jeweils zugeordnete Ende des Rohrkörpers 18 unter Abdichtung diesem gegenüber eingebracht, z. B. eingesteckt. Zur Abdichtung dienen z. B. zwei beabstandete Dichtungsringe 23, 24. Die Anschlüsse 21, 22 sind durch eine Öffnung 25 bzw. 26 im jeweiligen stirnseitigen Gehäusedeckel 12 bzw. 13 unter Abdichtung diesem gegenüber hindurch nach außen geführt. Zur jeweiligen Abdichtung dient ein Dichtungsring 29 bzw. 30 auf dem Anschluss 21 bzw. 22.

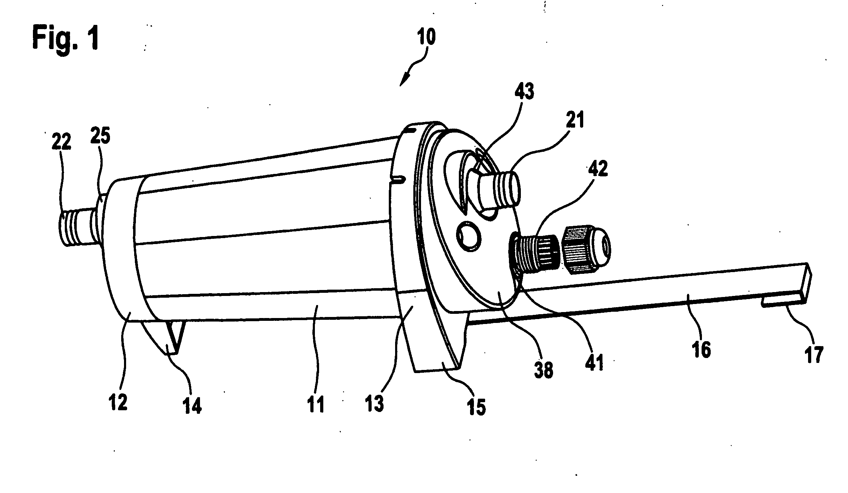

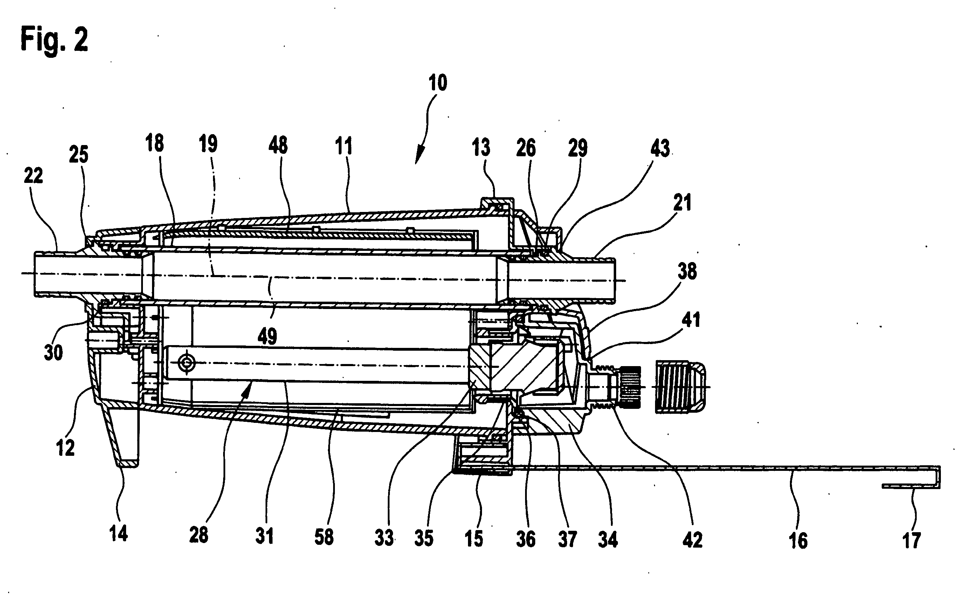

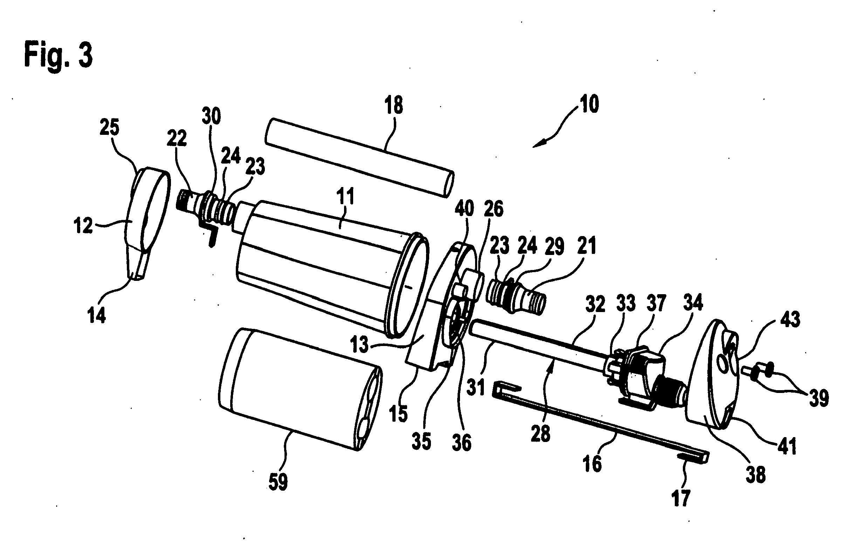

Die UV-Lichtquelle 28 kann einen Stab oder, wie beim gezeigten Ausführungsbeispiel vorgesehen ist, mehrere z. B. zwei, zueinander etwa parallele, nebeneinander verlaufende Stäbe 31, 32 mit einem gemeinsamen Sockel 33 aufweisen. Mit dem Sockel 33 sind die Stäbe 31, 32 an einem Deckelteil 34 des Gehäuses 11 derart gehalten, dass der Deckelteil 34 mitsamt der UV-Lichtquelle 28 als Einheit demontierbar ist, ohne die Dichtheit des Systems zu beeinflussen. Einer der Gehäusedeckel, in Fig. 1 bis 3 der Gehäusedeckel 13, weist einen Durchlass 35 für die UV-Lichtquelle 28 mit Sockel 33 und eine äußere Dichtfläche 36 auf, an der der Deckelteil 34, der den Sockel 33 mit der UV-Lichtquelle 28 trägt, mit einer umlaufenden Dichtung 37 anliegt. Der Deckelteil 34 ist annähernd dreieckförmig. Die umlaufende Dichtung 37 hat in Anpassung daran einen ebenfalls etwa dreieckförmigen Verlauf. Der Deckelteil 34, der den Sockel 33 mit der UV-Lichtquelle 28 trägt, und der Gehäusedeckel 13 sind mittels einer lösbaren Abschlusskappe 38 abgedeckt, die an der stirnseitigen Außenseite des Gehäusedeckels 13 anliegt und im Inneren den Deckelteil 34 aufnimmt. Die Abschlusskappe 38 ist mittels Schrauben 39 am Gehäusedeckel 13 befestigt, die durch Löcher in der Abschlusskappe 38 hindurch bis hin zu zugeordneten Einschraubstutzen 40 des Gehäusedeckels 13 führen und in diese eingeschraubt sind. Die Abschlusskappe 38 enthält einen Durchlass 41 für einen Kabelstutzen 42, der durch den Durchlass 41 nach außen geführt ist und zur Aufnahme des Kabels der elektrischen Stromversorgung der UV-Lichtquelle 28 dient. Außerdem ist in der Abschlusskappe 38 eine Durchgangsöffnung 43 enthalten, durch die ein Anschluss 21 für den Zufluss oder den Abfluss des Mediums hindurch nach außen geführt ist.

Zur Demontage der Vorrichtung 10, z. B. für Reparaturzwecke, insbesondere für den Austausch der UV-Lichtquelle 28, bedarf es lediglich des Lösens der Schrauben 39, woraufhin die Abschlusskappe 38 abgezogen werden kann. Daraufhin kann der Deckelteil 34, der die UV-Lichtquelle 28 mit Sockel 33 trägt, demontiert werden. Die Abdichtung des das Medium führenden Stranges vom einen Anschluss 21 über den Rohrkörper 18 zum anderen Anschluss 22 ist davon nicht berührt, auch nicht die Abdichtung der jeweiligen Anschlüsse 21, 22 in Bezug auf den jeweiligen Gehäusedeckel 12, 13. Bei der Montage wird lediglich der Deckelteil 34 mit der Dichtung 37 an den Gehäusedeckel 31 angesetzt und die Abschlusskappe 38 über die Schrauben 39 und die diese aufnehmenden Einschraubstutzen 40 am Deckelteil 13 befestigt. Dabei ist es empfehlenswert, die Dichtung 37 beim Deckelteil 34 zu erneuern. Man erkennt, dass der Mediumfluss durch die Anschlüsse 21, 22 und den koaxialen Rohrkörper 18 geradlinig verläuft. Dies hat eine horizontale Durchströmung zur Folge. Aufgrund dessen ist ein etwaiger Druckverlust beim Medium außerordentlich gering, so dass sich nur ein entsprechend geringer Verlust an Volumenstrom ergibt.

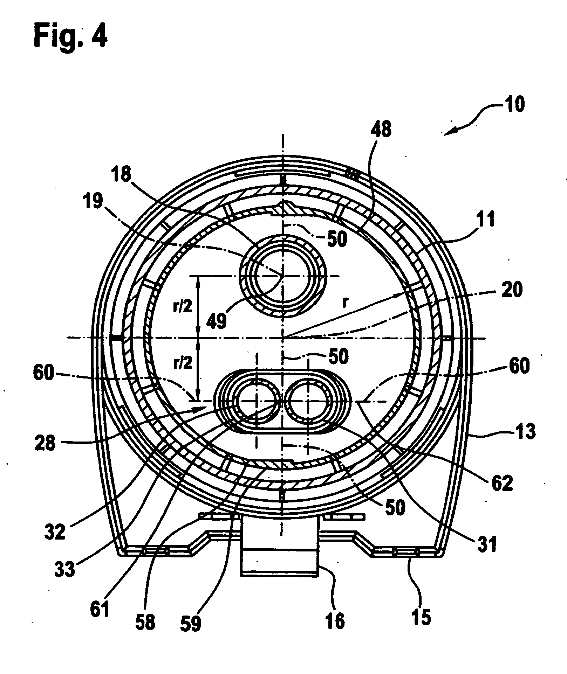

Insbesondere aus Fig. 4 ist ersichtlich, dass die beiden Stäbe 31, 32 der UV-Lichtquelle 28 und der Rohrkörper 18 im Dreieck angeordnet sind. Dem mindestens einen Rohrkörper 18 ist ein Reflektor 48 im Gehäuse 11 zugeordnet. Ferner ist der UV-Lichtquelle 28 ebenfalls ein Reflektor 58 zugeordnet. Die Reflektoren 48, 58 liegen einander gegenüber und sind jeweils zueinander offen. Beide sind etwa teilkreisförmig, mit Vorzug etwa halbkreisförmig. Sie liegen auf einem gemeinsamen Kreisbogen, insbesondere Kreis. In vorteilhafter Weise ergänzen sich der Reflektor 48 des Rohrkörpers 18 und der Reflektor 58 der UV-Lichtquelle zu einem Reflektorkreis, wie dieser insbesondere aus Fig. 4 ersichtlich ist. Beim gezeigten Ausführungsbeispiel sind die beiden etwa halbkreisförmigen Reflektoren 48, 58 zu einem Rohr 59 zusammengesetzt. Dieses Rohr 59 ist im Inneren des Gehäuses 11 aufgenommen und fixiert. Es ist auf der Innenseite mit einer Reflektionsfläche versehen, z. B. einer Spiegelschicht. Bei einem anderen, nicht gezeigten Ausführungsbeispiel ist statt dessen das Gehäuse 11 auf der Innenseite direkt mit jeweils einem Reflektor 48, 58 versehen, z. B. zur Bildung eines jeweiligen Reflektors mit einer Spiegelschicht versehen.

Der Rohrkörper 18 ist mit seiner Längsmittelachse 19 etwa im Brennpunkt, insbesondere auf der zur Längsmittelachse 19 etwa parallelen Brennpunktachse, des zugeordneten Reflektors 48 angeordnet. Dieser Brennpunkt bzw. die Brennpunktachse ist in den Zeichnungen mit 49 bezeichnet. Von besonderem Vorteil kann es sein, wenn dieser Brennpunkt 49 bzw. die Brennpunktachse des Reflektors 48 des Rohrkörpers 18 etwa bei dem halben Radius des Kreisbogens, insbesondere des Kreises, liegt, den die beiden Reflektoren 48, 58 darstellen. Die Längsmittelachsen 19 und 20 liegen in einer mit 50 bezeichneten Diametralebene. Innerhalb dieser Diametralebene 50 liegt der Brennpunkt 49, insbesondere die Brennpunktachse. Ist die Vorrichtung 10 mit lediglich einem Stab als UV-Lichtquelle 28 ausgestattet, so liegt zweckmäßigerweise die Längsmittelachse dieses einen Stabes innerhalb der Diametralebene 50, wobei dann auch der Brennpunkt 61 bzw. die Brennpunktachse dieses Reflektors 58 etwa bei dem halben Radius des Kreises liegt, der aus beiden Reflektoren 48, 58 gebildet ist. Dann liegen also die Brennpunkte 49, 61 beider Reflektoren 48, 58 innerhalb der Diametralebene 50 einander gegenüber und haben jeweils von der Kreismitte 20 einen Abstand, der etwa der Hälfte des Kreisradius entspricht.

Wenn die UV-Lichtquelle 28, wie beim Ausführungsbeispiel, zwei Stäbe 31, 32 aufweist, sind diese zweckmäßigerweise so angeordnet, dass die Längsmittelachsen der Stäbe 31, 32 innerhalb einer beiden gemeinsamen Stablängsebene 60 verlaufen. Hierbei ist es von Vorteil, wenn der Brennpunkt 61 bzw. die Brennpunktachse des Reflektors 58 innerhalb dieser Stablängsebene 60 liegt. Dies gilt für den Fall, bei dem gemäß Fig. 4 die Stäbe 31, 32 derart im Gehäuse 11 angeordnet sind, dass die Stablängsebene 60 auf einer solchen Kreissekante 62 liegt, die etwa rechtwinklig zur Diametralebene 50 ausgerichtet ist. Hierbei kann es von Vorteil sein, dass diese Kreissekante 62 einen Abstand etwa dem halben Radius entsprechend von der Kreismitte 20 hat und dem Rohrkörper 18 diametral gegenüberliegt. Der Brennpunkt 61, insbesondere die Brennpunktachse, des Reflektors 58 der UV-Lichtquelle 28 verläuft also mit einem Abstand von etwa dem halben Radius von der Kreismitte 20 innerhalb der Diametralebene 50, die etwa rechtwinklig zur Kreissekante 62 gerichtet ist. Der Brennpunkt 49, insbesondere die Brennpunktachse, des anderen Reflektors 48 des Rohrkörpers 18 liegt dabei innerhalb der Diametralebene 50 und ebenfalls etwa auf dem halben Radius von der Kreismitte 20. Es hat sich gezeigt, dass bei einer solchen Anordnung ein solcher Strahlengang, ausgehend von der UV-Lichtquelle 28, erreichbar ist, der eine direkte Bestrahlung des im Rohrkörper 18 geführten Mediums zur Folge hat mit einer erheblichen Verbesserung der Entkeimungsleistung.

Bei einem anderen, nicht gezeigten Ausführungsbeispiel sind die Stäbe 31, 32 derart im Gehäuse 11 angeordnet, dass die Stablängsebene 60 radial und dem Rohrkörper 18 diametral gegenüberliegend verläuft. In einem solchen Fall verläuft der Brennpunkt 49, insbesondere die Brennpunktachse, des Reflektors 48 des Rohrkörpers 18 innerhalb derjenigen Diametralebene 50, innerhalb der auch die Stablängsebene 60 verläuft. Die Hälfte der Stablängsebene 60 kann dabei einen Abstand von der Größe etwa des halben Radius von der Kreismitte 20 haben und etwa im Brennpunkt 61, insbesondere auf der zur Stablängsebene 60 etwa parallelen Brennpunktachse, des Reflektors 58 liegen. Hierbei ist also die Stablängsebene 60, ausgehend von Fig. 4, um 90° derart gedreht, dass diese mit der Diametralebene 50 zusammenfällt. Der Brennpunkt 61, insbesondere die Brennpunktachse, verbleibt bei dieser Drehung an der gleichen Stelle mit einem Abstand von der Kreismitte 20 von etwa dem halben Radius des Kreises.

Man erkennt, dass die Vorrichtung 10 einfach ist, aus nur wenigen Bauteilen besteht und dadurch kostengünstig gestaltet werden kann. Ihre Handhabung ist besonders einfach. Die Vorrichtung 10 ist dabei in hohem Maße wirksam. Es wird eine Verbesserung der Entkeimungsleistung erzielt durch möglichst direkte Bestrahlung des Mediums, das den Rohrkörper 18 passiert. Aufgrund des linearen Mediumdurchganges bei den Anschlüssen 21, 22 und dem Rohrkörper 18 wird ein etwaiger Druckverlust wesentlich reduziert und ein möglichst großer Volumenstrom erreicht.

## Patentansprüche

1. Vorrichtung zum Bestrahlen von Medien mittels ultraviolettem (UV)-Licht, mit einem Gehäuse (11), das mindestens einen vom Medium durchströmten Rohrkörper (18) aus UV-durchlässigem Werkstoff und mindestens eine im Abstand vom Rohrkörper (18) und etwa parallel dazu angeordnete UV-Lichtquelle (28) enthält, der ein erster Reflektor (58) zugeordnet ist, wobei dem mindestens einen Rohrkörper (18) ein zweiter Reflektor (48) zugeordnet ist, der dem ersten Reflektor (58) der UV-Lichtquelle (28) gegenüberliegt und zu diesem hin offen ist, wobei die UV-Lichtquelle (28) zwei zueinander etwa parallele, nebeneinander verlaufende Stäbe (31, 32) mit einem gemeinsamen Sockel (33) aufweist, mit dem diese an einem Deckelteil (34) des Gehäuses (11) derart gehalten sind, dass der Deckelteil (34) mitsamt der UV-Lichtquelle (28) als Einheit demontierbar ist,
**dadurch gekennzeichnet, dass** der erste Reflektor (58) und der zweite Reflektor (48) auf einem gemeinsamen Kreis verlaufen und jeweils etwa halbkreisförmig ausgestaltet sind, wobei der Rohrkörper (18) mit seiner Längsmittelachse (19) auf einer zur Längsmittelachse (19) etwa parallelen Brennpunktachse (49) des zweiten Reflektors (48) angeordnet ist, wobei die Brennpunktachse (49) des zweiten Reflektors (48) innerhalb einer Diametralebene (50) liegt und mit einem Abstand von etwa dem halben Radius von der Mitte (20) des gemeinsamen Kreises verläuft, wobei die Stäbe (31, 32) derart im Gehäuse (11) angeordnet sind, dass die beiden Stäbe (31, 32) mit ihren Längsmittelachsen innerhalb einer beiden gemeinsamen Stablängsebene (60) verlaufen, wobei die Stablängsebene (60) radial und dem Rohrkörper (18) diametral gegenüberliegend verläuft und auf einer zu der Diametralebene (50) rechtwinklig verlaufenden Kreissekante (62) liegt, die einen Abstand von etwa dem halben Radius von der Mitte (20) des gemeinsamen Kreises hat und dem Rohrkörper (18) diametral gegenüberliegt, und wobei eine Brennpunktachse (61) des ersten Reflektors (58) mit einem Abstand von etwa dem halben Radius von der Mitte (20) des gemeinsamen Kreises innerhalb der Diametralebene (50) verläuft und innerhalb der Stablängsebene (60) liegt.

2. Vorrichtung nach Anspruch 1, **dadurch gekennzeichnet, dass** jeder Reflektor (48, 58) an der Innenseite des Gehäuses (11) angeordnet ist.

3. Vorrichtung nach Anspruch 1, **dadurch gekennzeichnet, dass** jeder Reflektor (48, 58) als Spiegelschicht ausgebildet ist.

4. Vorrichtung nach Anspruch 1, **dadurch gekennzeichnet, dass** die beiden Stäbe (31, 32) der UV-Lichtquelle (28) und der Rohrkörper (18) im Dreieck angeordnet sind.

5. Vorrichtung nach einem der Ansprüche 1 bis 4, **dadurch gekennzeichnet, dass** der Rohrkörper (18) im Gehäuse (11) derart angeordnet ist, dass die Längsmittelachse (19) des Rohrkörpers (18) zum Längsverlauf der UV-Lichtquelle (28) und zur Längsmittelachse (20) des Gehäuses (11) etwa parallel verläuft und der Rohrkörper (18) an einem Ende mit einem Anschluss (21) für den Zufluss und am gegenüberliegenden Ende mit einem Anschluss (22) für den Abfluss dicht verbunden ist, die mit der Längsmittelachse (19) des Rohrkörpers (18) fluchten.

6. Vorrichtung nach Anspruch 5, **dadurch gekennzeichnet, dass** jeder Anschluss (21, 22) etwa rohrförmig ist und unter Abdichtung in die zugeordneten Rohrenden des Rohrkörpers (18) eingebracht ist, insbesondere eingesteckt ist.

7. Vorrichtung nach Anspruch 6, **dadurch gekennzeichnet, dass** jeder Anschluss (21, 22) durch eine Öffnung (25, 26) in einem jeweiligen stirnseitigen Gehäusedeckel (12, 13), unter Abdichtung diesem gegenüber, hindurch nach außen geführt ist.

8. Vorrichtung nach Anspruch 7, **dadurch gekennzeichnet, dass** einer der Gehäusedeckel (12, 13) einen Durchlass (35) für die UV-Lichtquelle (28) mit Sockel (33) und eine äußere Dichtfläche (36) aufweist, an der der Deckelteil (34), der den Sockel (33) mit der UV-Lichtquelle (28) trägt, mit einer Dichtung (37) anliegt und dass dieser Deckelteil (34) und der Gehäusedeckel (13) mittels einer lösbaren Abschlusskappe (38) abgedeckt sind, durch die einer der Anschlüsse (21, 22) für den Zufluss oder den Abfluss und ferner die elektrische Stromversorgung der UV-Lichtquelle (28) hindurch geführt sind.

9. Vorrichtung nach einem der Ansprüche 1 bis 8, **dadurch gekennzeichnet, dass** der durch den ersten und den zweiten Reflektor (58, 48) gebildete gemeinsame Reflektorkreis aus einem etwa zylindrischen Rohr (59) mit innenseitiger Reflektionsfläche gebildet ist, das im Inneren des Gehäuses (11) zwischen den beiden Gehäusedeckeln (12, 13) angeordnet ist.

## Claims

1. Device for irradiating media with ultraviolet (UV) light, with a housing (11) which contains at least one tubular body (18), which is composed of UV-permeable material and through which medium flows, and at least one UV light source (28) disposed at a distance from the tubular body (18) and substantially parallel thereto, with a first reflector (58) assigned to the at least one UV light source (28), wherein a second reflector (48), which is situated opposite the first reflector (58) of the UV light source (28) and is open toward the first reflector (58), is assigned to the at least one tubular body (18), wherein the UV light source (28) comprises two rods (31, 32) which extend next to one another substantially in parallel and have a common base (33) with which they are held on a cover piece (34) of the housing (11) such that the cover piece (34) is removable together with the UV light source (28) as a unit,
**characterized in that** the first reflector (58) and the second reflector (48) extend along a common circle and are both substantially semi-circular, wherein the tubular body (18) is disposed by way of its longitudinal central axis (19) on a focal point axis (49) of the second reflector (48) substantially parallel to the longitudinal central axis (19), wherein the focal point axis (49) of the second reflector (48) lies within a diametral plane (50) and extends at a distance of about one half radius from the center (20) of the common circle, wherein the rods (31, 32) are disposed in the housing (11) such that the two rods (31, 32) extend by way of their longitudinal central axes within a rod longitudinal plane (60) that is common to both, wherein the rod longitudinal plane (60) extends radially and diametrically opposite the tubular body (18) and lies on a secant line (62) which extends at a right angle to the diametral plane (50), which secant line (62) has a distance of about one half radius from the center (20) of the common circle and is located diametrically opposite the tubular body (18), and wherein a focal point axis (61) of the first reflector (58) extends within the diametral plane (50) at a distance of about one half radius from the center (20) of the common circle and lies within the rod longitudinal plane (60).

2. Device according to claim 1, **characterized in that** each reflector (48, 58) is disposed on an inner side of the housing (11).

3. Device according to claim 1, **characterized in that** each reflector (48, 58) is in the form of a mirror coating.

4. Device according to claim 1, **characterized in that** the two rods (31, 32) of the UV light source (28), and the tubular body (18) are arranged in a triangle.

5. Device according to any of claims 1 to 4, **characterized in that** the tubular body (18) is disposed in the housing (11) such that the longitudinal central axis (19) of the tubular body (18) extends substantially parallel to a longitudinal extension of the UV light source (28) and a longitudinal central axis (20) of the housing (11), and the tubular body (18) is connected in a leak-proof manner at one end to a connector (21) for inflow, and at an opposite end to a connector (22) for outflow, which align with the longitudinal central axis (19) of the tubular body (18).

6. Device according to claim 5, **characterized in that** each of the connectors (21, 22) is substantially tubular and is placed, in particular inserted, into the assigned tube ends of the tubular body (18) in a leak-proof manner.

7. Device according to claim 6, **characterized in that** each connector (21, 22) extends outwardly through an opening (25, 26) in a respective end-face housing cover (12, 13), and is sealed relative thereto.

8. Device according to claim 7, **characterized in that** one of the housing covers (12, 13) comprises a passage (35) for the UV light source (28) with the base (33), and an outer sealing surface (36) against which the cover piece (34) carrying the base (33) with the UV light source (28) rests by way of a seal (37), and **in that** said cover piece (34) and the housing cover (13) are covered by a detachable end cap (38) through which one of the connectors (21, 22) for the inflow or the outflow, and the electrical power supply for the UV light source (28) are routed.

9. The device according to any of claims 1 to 8, **characterized in that** the common reflector circle, which is formed by the first and the second reflector (58, 48), is formed by a substantially cylindrical tube (59) with a reflective surface on an inner side thereof, the tube (59) being disposed in the interior of the housing (11) between the two housing covers (12, 13).

## Revendications

1. Dispositif de rayonnement d'agents à l'aide de lumière UV ultraviolette, avec un carter (11) contenant au moins un corps tubulaire (18) traversé par un agent et fabriqué à partir d'une matière première perméable aux UV et au moins une source lumineuse d'UV (28) disposée à une certaine distance du corps tubulaire (18) et approximativement parallèle à lui et auquel est associé un premier réflecteur (58), un deuxième réflecteur (48) étant associé à l'au moins un corps tubulaire (18), ledit réflecteur étant placé en face du premier réflecteur (58) de la source lumineuse d'UV (28) et étant ouvert dans sa direction, la source lumineuse d'UV (28) comportant deux tiges (31, 32) parallèles l'une par rapport à l'autre et s'étendant côte à côte avec un socle (33) commun avec lequel lesdites tiges sont maintenues de telle sorte contre une partie de cache (34) du carter (11) que la partie de cache (34) peut être démontée comme une unité conjointement avec la source lumineuse d'UV (28), **caractérisé en ce que** le premier réflecteur (58) et le deuxième réflecteur (48) s'étendent sur un cercle commun et sont respectivement configurés approximativement en forme de demi-cercle, le corps tubulaire (18) étant disposé avec son axe moyen longitudinal (19) sur un axe de point focal (49), approximativement parallèle à l'axe moyen longitudinal (19), du deuxième réflecteur (48), l'axe de point focal (49) du deuxième réflecteur (48) se situant à l'intérieur d'un plan diamétral (50) et s'étendant à une certaine distance d'approximativement la moitié du rayon en partant du centre (20) du cercle commun, les tiges (31, 32) étant disposées de telle sorte dans le carter (11) que les deux tiges (31, 32) s'étendent avec leur axe moyen longitudinal respectif à l'intérieur d'un plan de tige (60) commun aux deux, le plan de tige (60) s'étendant dans le plan radial et étant diamétralement opposé au corps tubulaire (18) et reposant sur un bord de cercle (62) s'étendant à angle droit par rapport au plan diamétral (50) ayant une distance d'approximativement la moitié du rayon en partant du centre (20) du cercle commun et étant diamétralement opposé au corps tubulaire (18) et un axe de point focal (61) du premier réflecteur (58) s'étendant à une certaine distance d'approximativement la moitié du rayon en partant du centre (20) du cercle commun à l'intérieur du plan diamétral (50) et se plaçant à l'intérieur du plan de tige (60).

2. Dispositif selon la revendication 1, **caractérisé en ce que** chaque réflecteur (48, 58) est disposé au niveau du côté intérieur du carter (11).

3. Dispositif selon la revendication 1, **caractérisé en ce que** chaque réflecteur (48, 58) prend la forme d'une couche réfléchissante.

4. Dispositif selon la revendication 1, **caractérisé en ce que** les deux tiges (31, 32) de la source lumineuse d'UV (28) et du corps tubulaire (18) sont disposées en triangle.

5. Dispositif selon l'une quelconque des revendications 1 à 4, **caractérisé en ce que** le corps tubulaire (18) est disposé de telle sorte dans le carter (11) que l'axe moyen longitudinal (19) du corps tubulaire (18) s'étend quelque peu parallèlement à la trajectoire longitudinale de la source lumineuse d'UV (28) et à l'axe moyen longitudinal (20) du carter (11) et que le corps tubulaire (18) est relié de façon étanche à une extrémité avec un raccord (21) prévu pour l'amenée et à l'extrémité opposée avec un raccord (22) pour le reflux, lesdites extrémités étant alignées avec l'axe moyen longitudinal (19) du corps tubulaire (18).

6. Dispositif selon la revendication 5, **caractérisé en ce que** chaque raccord (21, 22) est approximativement en forme de tube et est amené dans les extrémités de tube associées du corps tubulaire (18), notamment enfiché, pour réaliser le joint d'étanchéité.

7. Dispositif selon la revendication 6, **caractérisé en ce que** chaque raccord (21, 22) est guidé vers l'extérieur, à travers une ouverture (25, 26) prévue dans un cache de carter (12, 13) respectif placé du côté avant, pour réaliser le joint d'étanchéité par rapport à lui.

8. Dispositif selon la revendication 7, **caractérisé en ce qu'**un des caches de carter (12, 13) comporte un passage (35) pour la source lumineuse d'UV (28) dotée d'un socle (33) et une surface étanche (36) extérieure au niveau de laquelle la partie de cache (34) supportant le socle (33) avec la source lumineuse d'UV (28) repose avec un joint (37) et que cette partie de cache (34) et le cache de carter (13) sont recouverts au moyen d'un bouchon d'extrémité (38) amovible, un des raccords (21, 22) prévu pour l'amenée ou le reflux ainsi que l'alimentation électrique de la source lumineuse d'UV (28) étant guidés à travers eux.

9. Dispositif selon l'une quelconque des revendications 1 à 8, **caractérisé en ce que** le cercle de réflecteur commun formé par le premier et le deuxième réflecteur (58, 48) est constitué d'un tube (59) approximativement cylindrique avec une surface réfléchissante située du côté intérieur et disposé à l'intérieur du carter (11) entre les deux caches de carter (12, 13).
